# EUROPEAN PATENT APPLICATION

(11) **EP 4 741 870 A1**
(43) Date of publication of application: **13.05.2026**
(21) Application number: 24211410.6
(22) Date of filing: 07.11.2024
(51) Int. Cl.: G01S 7/02, G01S 7/03, H01P 5/107

(54) **RADAR COMPONENT**

(71) Applicant: Xavveo GmbH, 13355 Berlin (DE)
(72) Inventor: MEISTER, Stefan, 12587 Berlin (DE); OTTE, Sven, 16540 Hohen Neuendorf (DE)
(74) Representative: Fischer, Uwe

(57) **Abstract**

An exemplary embodiment of the invention relates to a radar component (1) comprising an electric circuit board (5) having a patterned electrical layer (10), a chip (15) comprising an electronic-photonic-integrated circuit which is mounted on a top surface (5a) of the circuit board (5) and electrically connected to electrical traces (20) formed by sections of the electrical layer (10), at least one optical fiber (25) being butt-coupled to an assigned optical waveguide (30) integrated in the chip (15), the core of the butt-coupled end of the fiber (25) lying in the same plane (P) as the optical waveguide (30), said plane (P) being parallel to the said top surface (5a) of the circuit board (5), wherein the alignment between the fiber (25) and the optical waveguide (30) provides a straight, linear transmission of optical radiation between the optical fiber (25) and the optical waveguide (30), at least one radar antenna pad (35) formed by a metal pad of the electrical layer (10) or a metal pad of another electrical layer (100) of the circuit board (5), wherein the radar antenna pad (35) is connected to the chip (15) via at least one of said traces (20), and a microwave waveguide formed by a hollow pipe (45) and coupled to said radar antenna pad (35), wherein the fiber (25) is mechanically carried by a groove of the chip (15) which aligns the core of the fiber (25) with the assigned optical waveguide (30), and wherein a longitudinal axis of the hollow pipe (45) is angled to said plane (P), at least in the vicinity of the radar antenna pad (35).

## Description

The invention relates to radar components as well as vehicles and parts of vehicles that comprise radar components.

### Background of the invention

German Patent DE 10 2021 110 820 B3 discloses a radar sensor device with a transmitting and receiving path, an optical input for receiving an optical transmission signal, an optical output for providing an optical output signal, and an antenna for emitting an external electrical signal and receiving an electrical receiving signal. The radar sensor device is designed as a one-chip system.

### Objective of the present invention

An objective of the present invention is to propose a compact radar component that can be easily manufactured.

### Brief summary of the invention

An exemplary embodiment of the present invention relates to a radar component comprising an electric circuit board having a patterned electrical layer, a chip comprising an electronic-photonic-integrated circuit which is mounted on a top surface of the circuit board and electrically connected to electrical traces formed by sections of the electrical layer, at least one optical fiber being butt-coupled to an assigned optical waveguide integrated in the chip, the core of the butt-coupled end of the fiber lying in the same plane as the optical waveguide, said plane being parallel to the said top surface of the circuit board, wherein the alignment between the fiber and the waveguide provides a straight, linear transmission of optical radiation between the optical fiber and the optical waveguide, at least one radar antenna pad formed by a metal pad of the electrical layer or a metal pad of another electrical layer of the circuit board, wherein the radar antenna pad is connected to the chip via at least one of said traces, and a microwave waveguide formed by a hollow pipe and coupled to said radar antenna pad, wherein the fiber is mechanically carried by a groove of the chip which aligns the core of the fiber with the assigned optical waveguide, and wherein a longitudinal axis of the hollow pipe is angled to said plane, at least in the vicinity of the radar antenna pad.

An advantage of the above embodiment is that the radar component is very compact since the optical fibers are being butt-coupled via grooves to assigned optical waveguide integrated in the chip and therefore lay in the same plane as the optical waveguides. The microwave waveguide(s) are formed by hollow pipes and are angled with respect to said plane in order to facilitate the manufacturing process.

In the vicinity of the radar antenna pad, the longitudinal axis of the hollow pipe is preferably perpendicular to said plane.

A substrate may be mounted on said top surface of the electric circuit board or on a bottom surface of the electric circuit board. The hollow pipe is preferably embedded in said substrate and passes through said substrate.

A heat spreader may be mounted on top of the chip.

The substrate may be arranged adjacent to the heat spreader. Then, the substrate may block a movement of the heat spreader relatively to said chip in at least one direction that is parallel to said plane.

The substrate may form a bracket and/or hole providing an opening into which the heat spreader protrudes in a direction perpendicular to said plane.

The bracket and/or hole may block any movement of the heat spreader in at least two directions that are parallel to said plane.

Alternatively, the heat spreader may form a bracket and/or hole providing an opening into which the substrate protrudes in a direction perpendicular to said plane. Then, the bracket and/or hole may block any movement of the substrate in at least two directions that are parallel to said plane.

One of those two directions mentioned above is preferably parallel to the fiber and another of those two directions is preferably perpendicular thereto.

The bracket is preferably U-shaped.

The circuit board may have a cutout which the fiber passes towards the assigned optical waveguide. The cutout preferably defines the outer peripheral edge of the circuit board. The longitudinal axis of the cutout my be parallel to the longitudinal axis of the fiber.

A section of the substrate and/or a section of the heat spreader may be located above or beneath the cutout. The latter section of the substrate and/or the latter section of the heat spreader is preferably connected to (e. g. glued to) the fiber or preferably at least touches the fiber thereby providing support perpendicular to said plane and a vertical stress relief for the fiber.

The substrate and/or the heat spreader preferably completely cover the top surface of the circuit board.

For instance, the heat spreader may completely cover the top surface of the circuit board, and the substrate may completely cover the bottom surface of the circuit board.

The substrate is preferably attached to the circuit board without the need of additional heat in order to avoid additional thermal impact on the fibers and their connection to the optical waveguides during the step of attaching the substrate to the circuit board. The substrate may be attached by a screw joint or glue to avoid said additional thermal impact.

The substrate may extend beyond the peripheral edge of the circuit board, and the substrate and the fiber may be connected by glue.

The heat spreader may extend beyond the peripheral edge of the circuit board, and the heat spreader and the fiber may be connected by glue.

The hollow pipe may provide an internal interface coupled to the radar antenna pad, and an external interface for emitting radar radiation and/or receiving radar radiation. The external interface may be formed by an end section of the pipe that provides a radar antenna. The end section is preferably widened to provide a horn-shaped antenna.

The pipe may be bend in an intermediate section arranged between the internal interface and the external interface.

The external interface is preferably offset from the internal interface in the direction perpendicular to the plane, thereby increasing the distance between the chip and the external interface relative to the distance between the chip and the internal interface.

Two or more radar antenna pads may be formed by metal pads of the electrical layer or metal pads of another electrical layer of the circuit board, wherein each radar antenna pad is connected to the chip.

Two or more microwave waveguides may be each formed by a hollow pipe and coupled to a respective radar antenna pad.

The hollow pipes are preferably embedded in said substrate and pass through said substrate.

The substrate preferably comprises at least one attenuation zone between adjacent hollow pipes and/or at least one attenuation zone between one of the hollow pipes and the chip.

The substrate may be a moulded part and walls of the hollow pipes may be metallized surfaces of through holes in the moulded part.

The chip preferably comprises silicon photonics components and/or CMOS components for electrical purposes. The chip, for instance their CMOS components, are preferably configured to process radar frequencies in the range between 76 and 81 GHz.

Another embodiment of the invention relates to a vehicle or part of a vehicle that comprises one or more radar components as described above.

### Detailed description of the preferred embodiments

The preferred embodiments of the present invention will be best understood by reference to the drawings, wherein identical or comparable parts are designated by the same reference signs throughout.

It will be readily understood that the parameters of the embodiments of the present invention, as generally described herein, could vary in a wide range. Thus, the following more detailed description of exemplary embodiments of the present invention, is not intended to limit the scope of the invention but is merely representative of presently preferred embodiments of the invention.
- Figures 1-5: depict a first exemplary embodiment of a radar component according to the present invention,
- Figure 6: depicts a second exemplary embodiment of a radar component according to the present invention,
- Figure 7: depicts a third exemplary embodiment of a radar component according to the present invention,
- Figures 8-9: depict a fourth exemplary embodiment of a radar component according to the present invention,
- Figure 10: depicts a fifth exemplary embodiment of a radar component according to the present invention,
- Figure 11: depicts a sixth exemplary embodiment of a radar component according to the present invention, and
- Figure 12: depicts an exemplary embodiment of a vehicle according to the present invention.

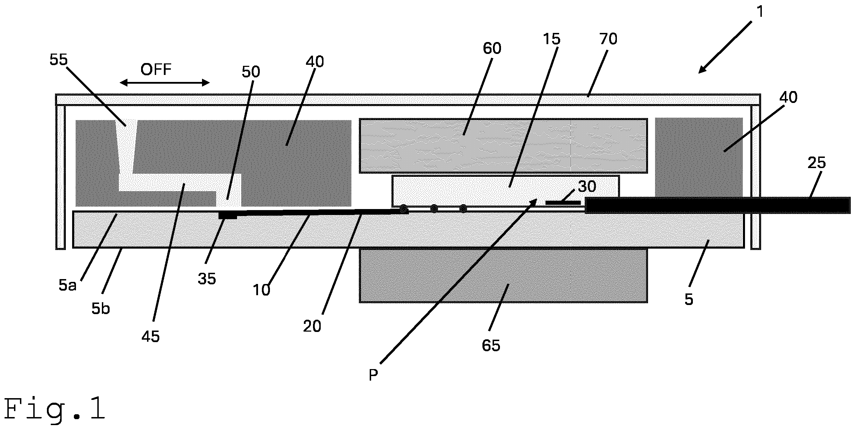

Figure 1 shows a cross-section of first exemplary embodiment of a radar component 1 according to the present invention.

The radar component 1 comprises an electric circuit board 5 having a patterned electrical layer 10 on its a top surface 5a.

A chip 15 is flip-chip-mounted on the top surface 5a of the circuit board 5 and electrically connected to electrical traces 20 that are formed by sections of the electrical layer 10. The chip 15 can be soldered to the electrical traces 20 via solder balls.

The chip 15 comprises an electronic-photonic-integrated circuit that can process optical and electrical signals. For instance, the chip 15 may generate and receive electrical signals and receive, process and output optical signals. To this end, the chip 15 may comprise photonic components such as for instance photodetectors and silicon-based electro-optic modulators. Furthermore, the chip 15 may comprise electrical components such as for instance silicon-based transistors for processing electrical signals. The electrical components are preferably based on CMOS technology and are preferably configured to process electrical signals in the microwave range (e. g. in the range between 76 and 81 GHz).

The chip 15 shown in Figure 1 can, for example, be identical in construction or at least functionally equivalent to the single-chip system described in the previously mentioned publication DE 10 2021 110 820 B3.

The embodiment of Figure 1 comprises four optical fibers 25 that are each butt-coupled to an assigned optical waveguide 30 that is integrated in the chip 15. The cross-section of Figure 1 just depicts one of the fibers 25 and the correspondingly assigned optical waveguide 30.

The core of the butt-coupled ends of the fibers 25 lay in the same optical plane P as the optical waveguides 30. The optical plane P sort of forms a reference plane of the radar component 1 and will be referred to hereinafter simply as "the" plane P.

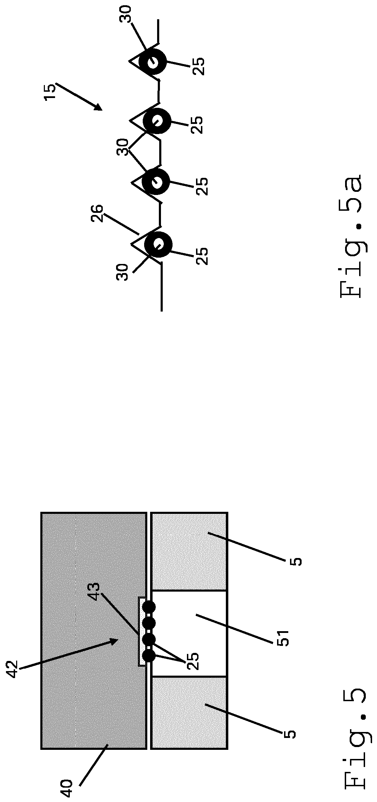

The plane P is parallel to the said top surface 5a of the circuit board 5. The alignment between the fiber 25 and the optical waveguide 30 provides a straight, linear transmission of optical radiation between each optical fiber 25 and the respective optical waveguide 30. Each fiber 25 is mechanically carried by a V-groove 26 (see for instance Fig. 5a) of the chip 15 which aligns the core of the fiber 25 with the assigned optical waveguide 30.

Two radar antenna pads 35 are formed by metal pads of the electrical layer 10. The cross-section of Figure 1 just depicts one of the radar antenna pads 35. Each radar antenna pad 35 is connected to the chip 15 via one or more of the traces 20.

The radar component 1 of Figure 1 further comprises a substrate 40, which is mounted on the top surface 5a of the electric circuit board 5. In order to avoid additional heat during the manufacturing step of mounting the substrate 40 on top of the circuit board 5, the substrate 40 is preferably glued to the circuit board 5.

Two hollow pipes 45 are embedded in the substrate 40 and pass through the substrate 40. Each of the hollow pipes 45 form a microwave waveguide that is coupled to one of the radar antenna pads 35. The cross-section of Figure 1 just depicts one of the hollow pipes 45. Since the microwave waveguides are embedded in the substrate 40, the substrate 40 may also be called microwave antenna substrate 40. The substrate 40 may be a moulded part, and walls of the hollow pipes 45 may be metallized surfaces of through holes in the moulded part.

Each hollow pipe 45 provides an internal interface 50 that is coupled to the assigned radar antenna pad 35, and an external interface 55 for emitting radar radiation and/or receiving radar radiation. The external interface 55 is formed by an end section of the pipe 45 that provides a radar antenna. The end section is preferably widened to provide a horn-shaped antenna for improved antenna characteristics.

In the vicinity of the radar antenna pad 35, the longitudinal axis of the hollow pipes 45 is preferably perpendicular to the plane P in order to achieve an optimal coupling of microwave radiation between the pads 35 and the hollow pipes 45.

The pipes 45 may be bend in an intermediate section arranged between the internal interface 50 and the external interface 55. Curved or bend sections may provide an offset OFF between the external interface 55 from the internal interface 50 in the direction parallel to the plane P, thereby increasing the distance between the chip 15 and the external interface 55 compared to the distance between the chip 15 and the internal interface 50.

The radar component 1 of Figure 1 further comprises a heat spreader 60 that is mounted on top of the chip 15. The substrate 40 is arranged adjacent to the heat spreader 60 and can therefore block a movement of the heat spreader 60 relatively to the chip 15 in at least one direction that is parallel to the plane P.

In order to protect and seal the top surface 5a of the circuit board 5, the substrate 40 and the heat spreader 60 may completely cover the top surface 5a of the circuit board 5. The substrate 40 and the heat spreader 60 are preferably glued to the circuit board 5 and chip 15 wherein any remaining slots or slits between the substrate 40 and the heat spreader 60, any remaining slots or slits between the substrate 40 and the circuit board 5, and any remaining slots or slits between the circuit board 5 and the heat spreader 60 are preferably also sealed by glue.

An electrical connector 65 may be arranged on the bottom surface 5b of the circuit board 5 and may be electrically connected to the chip 15 via through holes that are not shown in Figure 1.

In order to stabilize the connection between the fibers 25 and the chip 15, the fibers 25 may be connected to the substrate 40, a radom 70 that covers the substrate 40, and/or the circuit board 5.

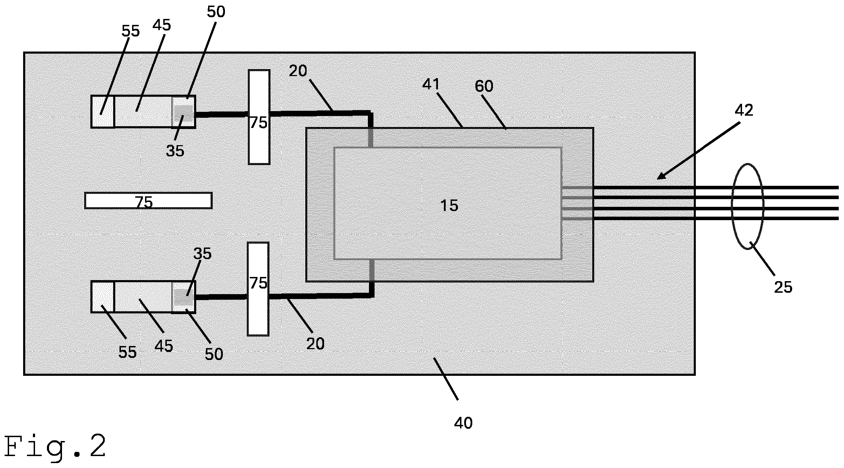

Figure 2 shows a top view of the radar component 1 of Figure 1. It can be seen that the chip 15 is optically connected to four fibers 25 and electrically connected to two antenna pads 35. Of course, the number of fibers 25 could be smaller than four or exceed four, and the number of pads 35 could be smaller than two or exceed two.

Figure 2 also shows optional attenuation zones 75 between adjacent hollow pipes 45 and between the hollow pipes 45 and the chip 15. These optional attenuation zones 75 decrease crosstalk between the pipes 45 and avoid direct transmission of radiation from the pipes 45 to the chip 15 and vice versa. The attenuation zones 75 may be formed by vertical slits or slots in the substrate 40 that are filled with attenuating material, which attenuates the radar radiation.

The substrate 40 forms a hole 41 providing an opening into which the heat spreader 60 protrudes in a direction perpendicular to the plane P. The hole 41 blocks any movement of the heat spreader 60 parallel to the plane P.

In Figure 2, the chip 15 is covered by the heat spreader 60 and is just illustrated in Figure 2 in order to also show the electrical connections between the chip 15 and the hollow pipes 45 and the optical connections between the chip 15 and the fibers 25.

Figure 2 also indicates the longitudinal section line of the cross-section that is illustrated in Figure 1.

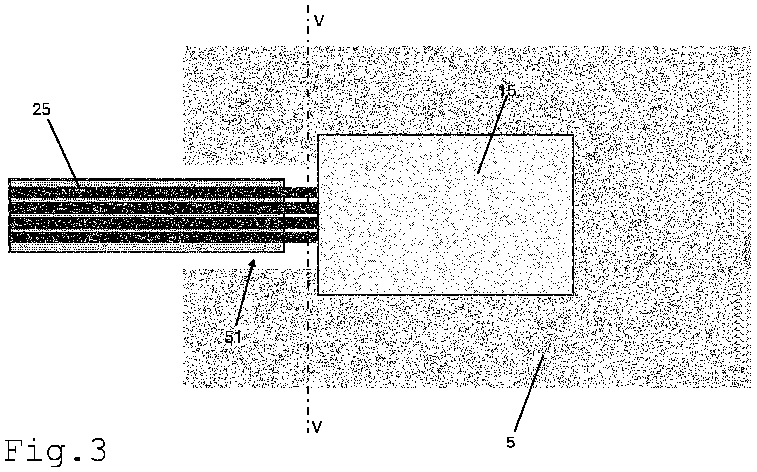

Figure 3 shows a further top view of the radar component 1 of Figure 1. In contrast to Figure 2, the fibers 25 are shown on the left side rather than the right (though this is only a matter of illustration), and the substrate 40 is omitted to illustrate the circuit board 5. It can be seen that the circuit board 5 has a cutout 51. The longitudinal axis of the cutout 51 is parallel to the longitudinal axis of the fiber 25. The fibers 25 pass the cutout 51 in order to reach their assigned optical waveguides 30.

Figures 2 and 3 together illustrate that a section 42 of the substrate 40 extends beyond the peripheral edge of the circuit board 5 and is located above the cutout 51. The section 42 above the cutout 51 may be glued to the fibers 25 in order to provide a stress relief for the fibers 25 in vertical direction.

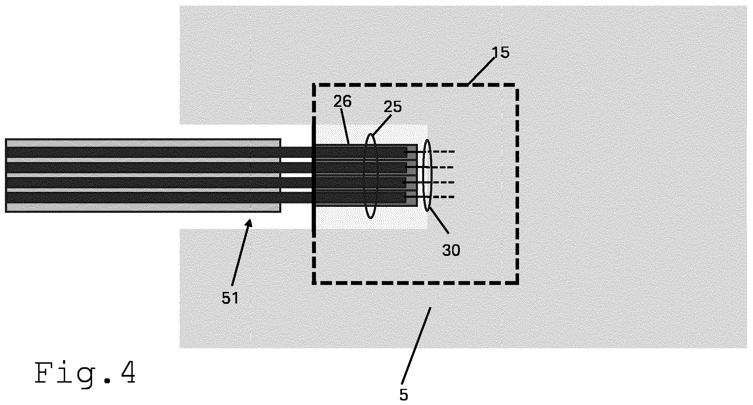

Figure 4 shows a bottom view of the radar component 1 of Figure 1. The butt-coupling between the end of the fibers 25 and the assigned integrated optical waveguides 30 that are located inside the chip 15, as well as the V-grooves 26 that carry the ends of the fibers 25, are designated by their respective reference numbers.

Figure 5 shows a further cross-section of the radar component 1 of Figure 1. The cross-section refers to the section line indicated by line V-V in Figure 3. It can be seen that the section 42 of the substrate 40 that extends beyond the peripheral edge of the circuit board 5, may have a slot or trough-like indentation 43 that increases the space to accommodate the fibers 25. The indentation 43 may be provided (filled) with glue in order to glue the fibers 25 to the substrate and in order to provide a stress relief for the fibers 25 in vertical direction.

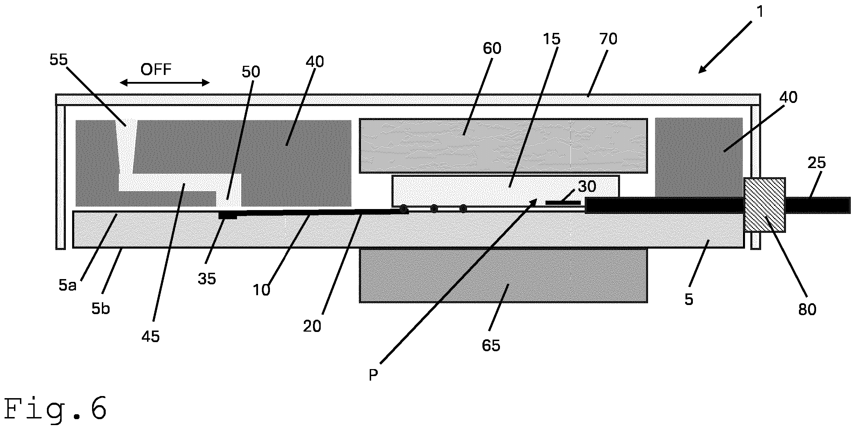

Figure 6 shows a cross-section of a second exemplary embodiment of a radar component 1 according to the present invention.

In order to stabilize the connection between the fibers 25 and the chip 15, a sleeve 80 that carries the fibers 25, is connected to the substrate 40, a radom 70 that covers the substrate 40, and/or the circuit board 5.

Additionally, all technical features and explanations related to Figures 1 through 5 may also apply (but do not need to apply) correspondingly to the embodiment shown in Figure 6.

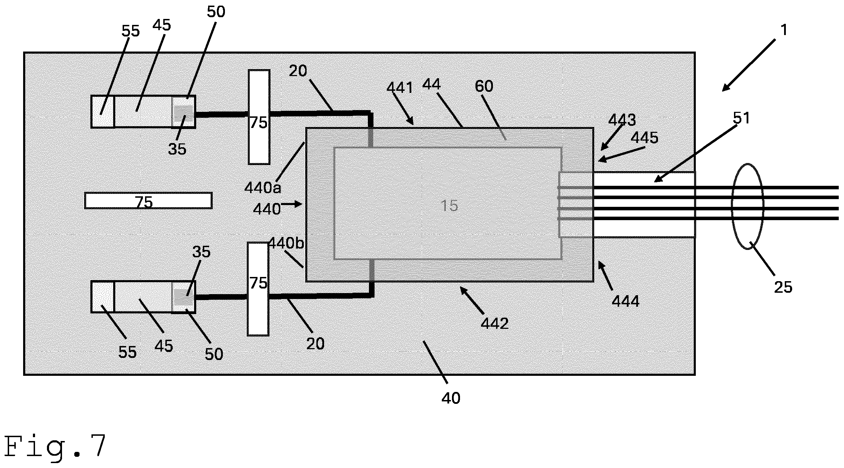

Figure 7 shows a cross-section of a third exemplary embodiment of a radar component 1 according to the present invention.

The substrate 40 of the third embodiment forms a bracket 44 into which the heat spreader 60 protrudes in a direction perpendicular to the plane P. The bracket 44 does not cover or at least does not entirely cover the cutout 51, but nonetheless blocks any movement of the heat spreader 60 parallel to the plane P, similar to the hole 41 of the first embodiment.

The bracket 44 comprises a remote section 440, a first side section 441, a second side section 442, a first clamping section 443 and a second clamping section 444, said sections providing an opening into which the heat spreader 60 protrudes in a direction perpendicular to said plane P.

In the top view of Figure 7, the remote section 440 is located remote from the fiber 25 and adjacent to a remote section of the heat spreader 60, the remote section 440 of the substrate 40 having a first end 440a and a second end 440b, wherein the remote section 440 of the substrate 40 blocks a movement of the heat spreader 60 in the direction away from the fiber 25.

In the top view of Figure 7, the first side section 441 is adjacent to a first side section of the heat spreader 60, the first side section 441 of the substrate 40 extending away from the first end 440a of the remote section 440 of the substrate 40 towards the first clamping section 443, the first clamping section 443 also being adjacent to the heat spreader 60 and forming a first portion of a fiber-adjacent section 445 of the substrate 40.

In the top view of Figure 7, the second side section 442 is adjacent to a second side section of the heat spreader 60, the second side section 442 of the substrate 40 extending away from the second end 440b of the remote section 440 towards the second clamping section 444, the second clamping section 444 being adjacent to the heat spreader 60 and forming a second portion of the fiber-adjacent section 445 of the substrate 40.

In the top view of Figure 7, the first clamping section 443 extends towards the second clamping section 444, and vice versa, with the clamping sections laterally bound the cutout 51 through which the fibers 25 pass towards the chip 15.

Additionally, all technical features and explanations related to Figures 1 through 6 may also apply (but do not need to apply) correspondingly to the embodiment shown in Figure 7.

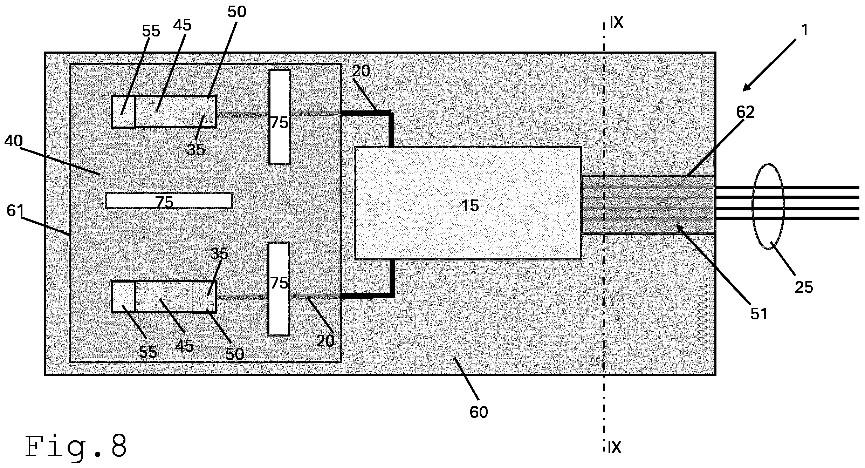

Figure 8 shows a top view of a fourth exemplary embodiment of a radar component 1 according to the present invention.

The heat spreader 60 forms a hole 61 providing an opening into which the substrate 40 protrudes in a direction perpendicular to the plane P. The hole 61 blocks any movement of the substrate 40 parallel to the plane P.

In order to protect and seal the top surface 5a of the circuit board 5, the substrate 40 and the heat spreader 60 may completely cover the top surface 5a of the circuit board 5. The substrate 40 and the heat spreader 60 are preferably glued to the circuit board 5 and chip 15 wherein any remaining slots or slits between the substrate 40 and the heat spreader 60, any remaining slots or slits between the substrate 40 and the circuit board 5, and any remaining slots or slits between the circuit board 5 and the heat spreader 60 are preferably also sealed by glue.

A section 62 of the heat spreader 60 extends beyond the peripheral edge of the circuit board 5 and is located above the cutout 51 of the circuit board 5. The section 62 above the cutout 51 may be glued to the fibers 25 or vice versa in order to provide a stress relief for the fibers 25 in vertical direction.

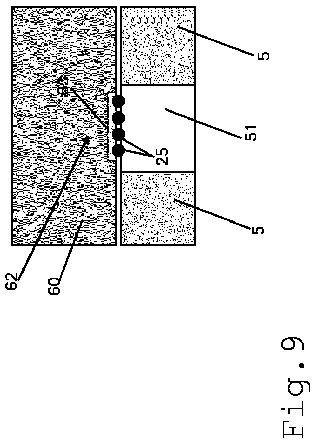

Figure 9 shows a cross-section of the radar component 1 of Figure 8. The cross-section refers to the section line indicated by line IX-IX in Figure 8. It can be seen that the section 62 of the heat spreader 60 that extends beyond the peripheral edge of the circuit board 5, may have a slot or trough-like indentation 63 that provides further space to accommodate the fibers 25. The indentation 63 may be provided (filled) with glue in order to glue the fibers 25 to the heat spreader 60 and in order to provide a stress relief for the fibers 25 in vertical direction.

Additionally, all technical features and explanations related to Figures 1 through 7 may also apply (but do not need to apply) correspondingly to the embodiment shown in Figures 8 and 9.

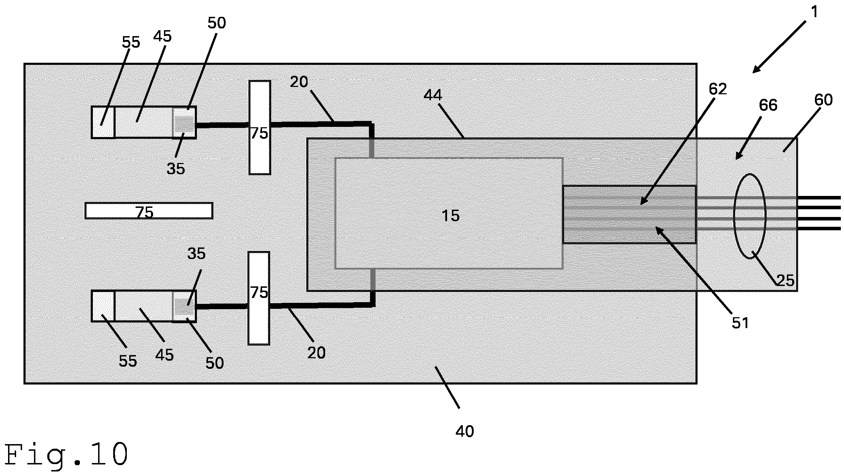

Figure 10 shows a top view of a fifth exemplary embodiment of a radar component 1 according to the present invention.

The substrate 40 of the fifth embodiment forms a U-shaped bracket 44 into which the heat spreader 60 protrudes in a direction perpendicular to the plane P. The U-shaped bracket 44 blocks a movement of the heat spreader 60 in at least two perpendicular directions that are parallel to the plane P.

In contrast to the fourth embodiment, the heat spreader 60 even extends beyond the cutout 51 of the circuit board 5 and therefore allows additional vertical heat flow via the bottom side of a free section 66 that extends beyond the cutout 51.

Additionally or alternatively, the heat spreader 60 may extend beyond the peripheral edge of the circuit board 5 in other directions parallel to said plane P (i.e. other directions than the direction towards the cutout 51).

Furthermore, all technical features and explanations related to Figures 1 through 9 may also apply (but do not need to apply) correspondingly to the embodiment shown in Figure 10.

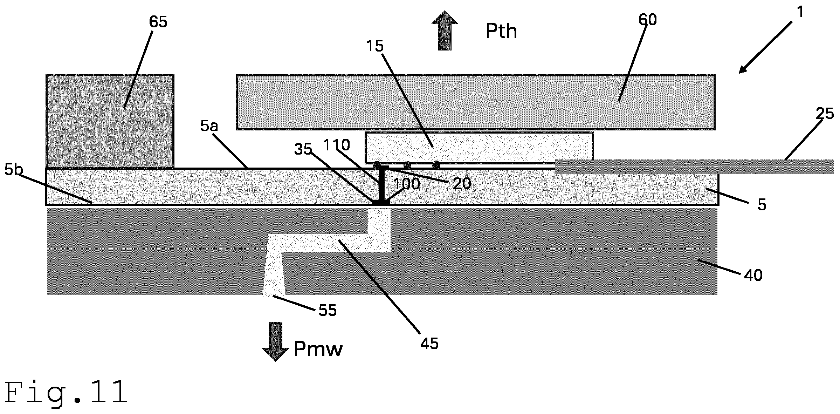

Figure 11 shows a cross-section of a sixth exemplary embodiment of a radar component 1 according to the present invention.

The heat spreader 60 is mounted to (preferably glued to) the chip 15 and on the top surface 5a of the circuit board 5 (e. g. via glue that is not illustrated) and may partly or completely cover the top surface 5a of the circuit board 5. The substrate 40 is mounted on (preferably glued to) the bottom surface 5b of the circuit board 5 and may partly or completely cover the bottom surface 5b of the circuit board 5.

An optional electrical connector 65 may be located on the top or bottom surface 5b of the circuit board 5 and/or on the side surfaces of the circuit board.

The radar antenna pads 35 are formed by metal pads of another electrical layer 100 of the circuit board 5. The radar antenna pads 35 are connected to the chip 15 via the traces 20 on the top surface 5a and via through holes 110 that vertically extend through the circuit board 5.

Heat Pth that is generated by the chip 15 can be emitted via the top side of the radar component 1 whereas the radar emission Pmw and the radar reception is carried out via the bottom side of the radar component 1.

Furthermore, all technical features and explanations related to Figures 1 through 10 may also apply (but do not need to apply) correspondingly to the embodiment shown in Figure 11.

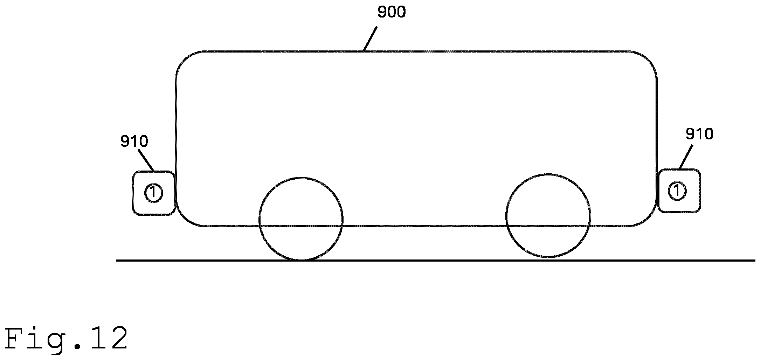

Figure 12 shows an exemplary embodiment of a vehicle 900 according to the present invention. The vehicle 900 comprises radar components 1, for instance such as those as discussed above in connection with Figures 1-11. The radar components 1 may be integrated in parts of the vehicles such as the bumpers 910.

In the drawings and specification, there have been disclosed a plurality of embodiments of the present invention. The applicant would like to emphasize that each feature of each embodiment may be combined with or added to any other of the embodiments in order to modify the respective embodiment and create additional embodiments. These additional embodiments form a part of the present disclosure and, therefore, the applicant may file further patent claims regarding these additional embodiments at a later stage of the prosecution.

Further, the applicant would like to emphasize that each feature of each of the following dependent claims may be combined with any of the present independent claims as well as with any other (one or more) of the present dependent claims (regardless of the present claim structure). Therefore, the applicant may direct further patent claims towards other claim combinations at a later stage of the prosecution.

### Reference signs

- 1: Radar component
- 5: Electrical circuit board
- 5a: Top surface
- 5b: Bottom surface
- 10: Electric layer
- 15: Chip
- 20: Electrical trace
- 25: Optical fiber
- 26: V-groove
- 30: Optical waveguide
- 35: Radar antenna pad
- 40: Substrate / Microwave antenna substrate
- 41: Hole
- 42: Section
- 43: Indentation
- 44: Bracket
- 45: Hollow pipe
- 50: Internal interface
- 51: Cutout
- 55: External interface
- 60: Heat spreader
- 61: Hole
- 62: Section
- 63: Indentation
- 65: Electrical connector
- 66: Free section
- 70: Radom
- 75: Attenuation zone
- 80: Sleeve
- 100: Electrical layer
- 110: Through hole
- 440: Remote section
- 440a: First end
- 440b: Second end
- 441: First side section
- 442: Second side section
- 443: First clamping section
- 444: Second clamping section
- 445: Fiber-adjacent section
- 900: Vehicle
- 910: Bumper
- OFF: Offset
- P: Optical plane
- Pmw: Radar emission
- Pth: Heat
- V-V: Line
- IX-IX: Line

## Claims

1. A radar component (1) comprising
an electric circuit board (5) having a patterned electrical layer (10),
a chip (15) comprising an electronic-photonic-integrated circuit which is mounted on a top surface (5a) of the circuit board (5) and electrically connected to electrical traces (20) formed by sections of the electrical layer (10),
at least one optical fiber (25) being butt-coupled to an assigned optical waveguide (30) integrated in the chip (15), the core of the butt-coupled end of the fiber (25) lying in the same plane (P) as the optical waveguide (30), said plane (P) being parallel to the said top surface (5a) of the circuit board (5), wherein the alignment between the fiber (25) and the optical waveguide (30) provides a straight, linear transmission of optical radiation between the optical fiber (25) and the optical waveguide (30),
at least one radar antenna pad (35) formed by a metal pad of the electrical layer (10) or a metal pad of another electrical layer (100) of the circuit board (5), wherein the radar antenna pad (35) is connected to the chip (15) via at least one of said traces (20), and
a microwave waveguide formed by a hollow pipe (45) and coupled to said radar antenna pad (35),
wherein the fiber (25) is mechanically carried by a groove of the chip (15) which aligns the core of the fiber (25) with the assigned optical waveguide (30), and
wherein a longitudinal axis of the hollow pipe (45) is angled to said plane (P), at least in the vicinity of the radar antenna pad (35).

2. Radar component (1) of claim 1
wherein a substrate (40) is mounted on said top surface (5a) of the electric circuit board (5) or on a bottom surface (5b) of the electric circuit board (5), and
wherein the hollow pipe (45) is embedded in said substrate (40) and passes through said substrate (40).

3. Radar component (1) of claim 2
wherein a heat spreader (60) is mounted on top of the chip (15), and
wherein the substrate (40) is arranged adjacent to the heat spreader (60), the substrate (40) blocking a movement of the heat spreader (60) relatively to said chip (15) in at least one direction that is parallel to said plane (P).

4. Radar component (1) of any of the preceding claims,
wherein the substrate (40) forms a bracket (44) and/or hole (41) providing an opening into which the heat spreader (60) protrudes in a direction perpendicular to said plane (P), the bracket and/or hole blocking any movement of the heat spreader (60) in at least two directions that are parallel to said plane (P).

5. Radar component (1) of any of the preceding claims 1-3,
wherein the heat spreader (60) forms a bracket and/or hole (61) providing an opening into which the substrate (40) protrudes in a direction perpendicular to said plane (P), the bracket and/or hole blocking any movement of the substrate (40) in at least two directions that are parallel to said plane (P).

6. Radar component (1) of any of the preceding claims
wherein the circuit board (5) has a cutout (51) which the fiber (25) passes towards the assigned optical waveguide (30),
wherein a section of the substrate (40) and/or a section of the heat spreader (60) is located above or beneath the cutout (51), and
wherein said section of the substrate (40) and/or said section of the heat spreader (60) is connected to or touches the fiber (25) thereby providing support perpendicular to said plane (P) and a vertical stress relief for the fiber (25) .

7. Radar component (1) of any of the preceding claims
wherein the substrate (40) and/or the heat spreader (60) completely cover the top surface (5a) of the circuit board (5) .

8. Radar component (1) of any of the preceding claims 1-7
wherein the heat spreader (60) completely covers the top surface (5a) of the circuit board (5), and
wherein the substrate (40) completely covers the bottom surface (5b) of the circuit board (5).

9. Radar component (1) of any of the preceding claims
wherein the substrate (40) is glued to the circuit board (5) .

10. Radar component (1) of any of the preceding claims
wherein the hollow pipe (45) provides an internal interface (50) coupled to said radar antenna pad (35), and an external interface (55) for emitting radar radiation and/or receiving radar radiation, and
wherein the external interface (50) is formed by an end section of the pipe (45) that provides a radar antenna.

11. Radar component (1) of any of the preceding claims
wherein the pipe (45) is bend in an intermediate section arranged between the internal interface (50) and the external interface (55), and
wherein the external interface (55) is offset from the internal interface (50) in the direction perpendicular to the plane (P), thereby increasing the distance between the chip (15) and the external interface (55) relative to the distance between the chip (15) and the internal interface (50).

12. Radar component (1) of any of the preceding claims
wherein two or more radar antenna pads (35) are formed by metal pads of the electrical layer (10) or metal pads of another electrical layer (100) of the circuit board (5), wherein each radar antenna pad (35) is connected to the chip (15),
wherein two or more microwave waveguides are each formed by a hollow pipe (45) and coupled to a respective radar antenna pad (35), the hollow pipes (45) are embedded in said substrate (40) and pass through said substrate (40), and
wherein the substrate (40) comprises at least one attenuation zone (75) between adjacent hollow pipes (45) and/or at least one attenuation zone (75) between one of the hollow pipes (45) and the chip (15).

13. Radar component (1) of any of the preceding claims
wherein the substrate (40) is a moulded part and walls of the hollow pipes (45) are metallized surfaces of through holes in the moulded part.

14. Radar component (1) of any of the preceding claims
wherein the chip (15) comprises silicon photonics components and/or CMOS components.

15. Vehicle (900) or part (910) of a vehicle comprising a radar component (1) according to of any of the preceding claims.
